# EUROPEAN PATENT SPECIFICATION

(11) **EP 1 448 883 B1**
(45) Date of publication and mention of the grant of the patent: **17.08.2005**
(21) Application number: 02777575.8
(22) Date of filing: 20.11.2002
(51) Int. Cl.: F02K 1/34

(54) **NOISE ATTENUATOR ARRANGEMENT**
ANORDNUNG ZUR SCHALLDÄMPFUNG
DISPOSITIF D'ATTENUATION DE BRUIT

(30) Priority: 21.11.2001 GB 0127952; 24.04.2002 GB 0209371
(43) Date of publication of application: 25.08.2004
(73) Proprietor: Dunlop Aerospace Limited, Coventry, West Midlands CV6 4AA (GB)
(72) Inventor: BRISTOW, Andrew, Dunlop Aerospace Limited, Coventry CV6 4QY (GB); YEOMANS, Kevin, Holbrook Lane, Coventry CV6 4QY (GB)
(74) Representative: Dowler, Edward Charles
(86) International application number: PCT/GB2002/005230
(87) International publication number: WO 2003/046358

(56) References cited:
- EP-A- 0 354 161
- US-A- 4 913 260
- US-A- 5 906 225
- US-A- 6 135 238

## Description

This invention relates to an attenuator for reducing noise associated with an air bleed system particularly, but not exdusively, for a turbofan aircraft engine.

In an aircraft engine, particularly a large high bypass ratio turbofan, it may be necessary for the best operation of the engine to bleed air pressure from within the compressor. To do this, a servo-controlled valve can be provided in ducting leading from the compressor casing to the fan by-pass duct. Normally, there would be an array of several bleed valves spaced around the axis of the engine. Also, two or more valves cr valve arrays may be provided at different stages of the compressor. The different valves or valve arrays are opened and dosed, or sometimes modulated, i.e. set to give a required flow rate between on and off by an engine management system. The valves are controlled by this system along with other engine parameters to optimise the operation of the engine for different aperating conditions.

The release of high pressure air into the fan by-pass duct can create considerable noise and, at least in relation to valves which may open at low altitude when the aircraft is taxiing, taking off or landing, sound attenuation is required.

Patent application number GB2,132,269A discloses an attenuator for a gas turbine engine air bleed valve. The attenuator receives the plume of high pressure air from a compressor stage of the engine and has a large number of small holes which convert the stream to a multiplicity of air jets.

Patent application number GB 878 480 discloses a dome like body with grooves for the release of flow gas there through where said grooves are all of the same size.

Patent application number EP0354161A3 discloses a muffler plate for a refrigeration system compressor with a few relatively large holes arranged round a check valve.

US patent number 5,906.225 shows a refrigeration system expansion valve with an elongate attenuator member made of porous material.

According to the invention, there is provided an air bleed system for a turbofan aircraft engine, the system comprising duct means for receiving air from a compressor stage of the engine and directing said air to a bypass duct of the engine valve means within the duct means for controlling the flow of said air, and a sound attenuator member extending over the duct means downstream and having apertures distributed over the member for passing said air, characterised in that the apertures of the attenuator member are arranged for the distribution of the air passing through the attenuator member to be relatively more restricted in a central region of the member than in another region outside said central region.

Said another region is an annular region extending round said central region.

Preferably, the valve and attenuator member are constructed for the pressure drop from the upstream to the downstream side of the valve member to be substantially equal to the pressure drop through the attenuator member.

The attenuator member may be positioned for a high pressure stream of air from the valve to impinge upon said central region.

Advantageously, the attenuator member comprises a substantial number of relatively small perforations distributed over a peripheral region of the attenuator member and no or relatively few such apertures in the central region.

Preferably, the attenuator member has apertures differentially distributed over the attenuator member and porous material adjacent at least some of the apertures.

The porosity of the porous material may be different in different regions of the attenuator member.

The attenuator member may comprise porous material for defining said apertures, the porosity of the porous material being different in different regions of the attenuator member.

The porous material may be porous metallic foam.

The valve may be a bullet valve.

For a better understanding of the invention and to show how the same may be carried into effect, reference will now be made, by way of example, to the accompanying drawings, in which:
Figure 1 is a sectioned plan view of an air bleed arrangement for an aircraft engine;
Figure 2 is a top view of an attenuator used in the Figure 1 arrangement;
Figures 3 to 7 are top views of the attenuator shown in Figure 1 showing alternative layouts of holes in the cover of the attenuator.

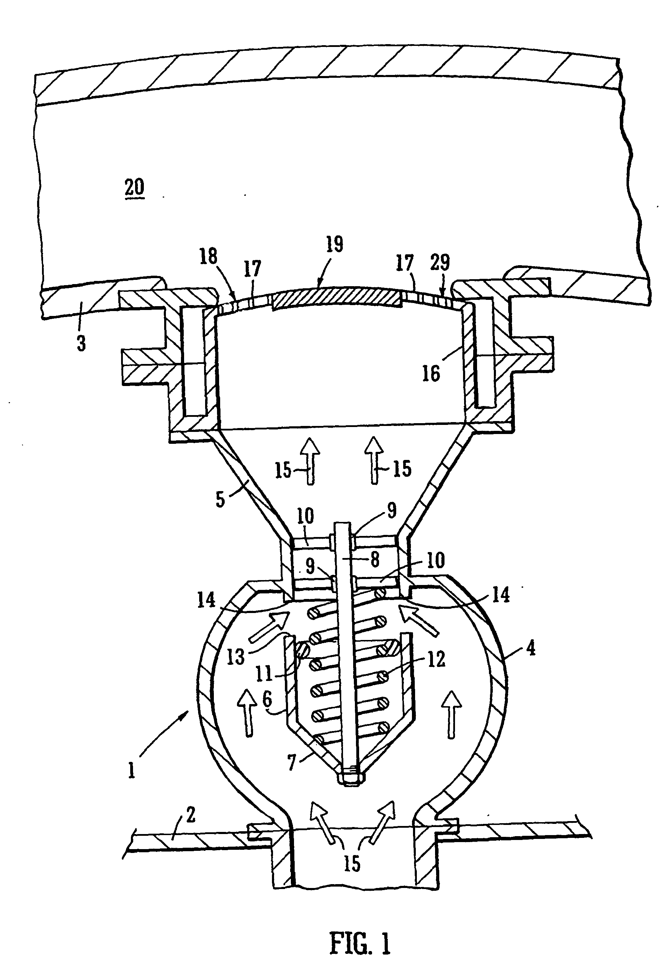

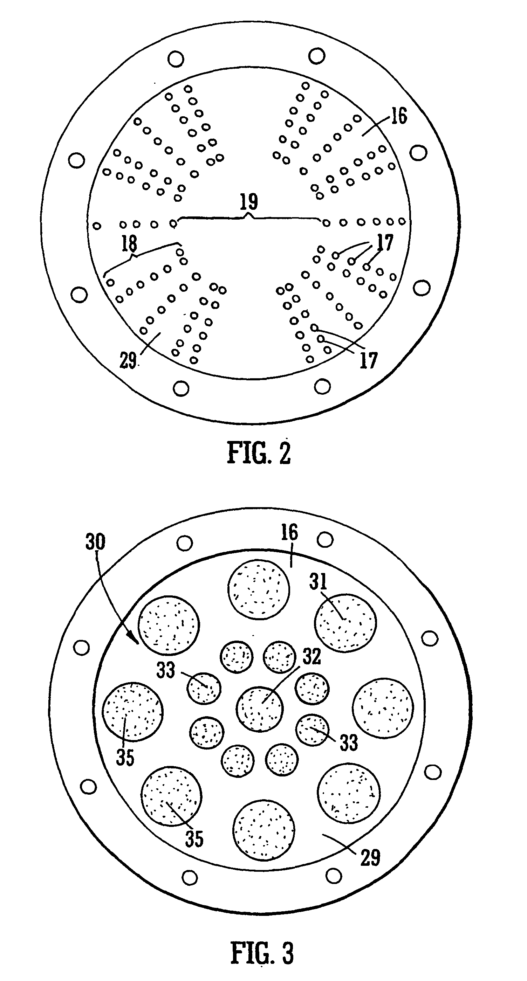

In Figures 1 and 2, an air bleed arrangement for a high-bypass turbofan aircraft engine may comprise duct means 1 leading from the compressor casing 2 to the engine casing 3. The duct means includes the body 4 of a "bullet-type" air bleed valve. It is called a "bullet-type" valve because it comprises a valve member 6 having a portion 7 which generally smoothly reduces in diameter in the direction facing the flow of the air from the compressor casing 2 through the valve 4. The valve member 6 is mounted on a shaft 8 that is supported by bearings 9 held in respective spiders 10. The spiders 10 are fixed to the ducting 5 above the valve member 6. The valve member 6 is hollow with the top carrying a sealing ring 11. Inside the sealing ring there is a spring 12. The valve member 6 is normally pushed by air pressure against the spring 12 so that the periphery 13 of the member 6 engages a matching sealing portion 14 of the valve body 4. This closes the valve 4. To open the valve, a counter pressure is applied to the interior of the valve member.

When the valve is open, air flows at high pressure as shown by arrows 15 and tends to form a jet or plume with the maximum velocity above the valve member 6.

Above the valve 6, the ducting 5 leads to a hat shaped attenuator member 16, the top of which is provided with a large number of small holes 17. The holes might have a diameter of 1.6 mm and there might be around 1500 of them evenly distributed over an annular region 18 around the top of the member 16. However, there are no holes in the central region 19 of the member 16. It is in this central region 19 that the jet or plume of air from the valve impinges.

The valve 4 and the member 16 are constructed and dimensioned so that the pressure drop across the valve, i.e. from the upstream to the downstream side of the valve member 6 is about equal to the pressure drop across the attenuator member 16.

From the holes 17 in the member 16, the air leads out into the by-pass duct 20 of the engine.

In Figure 3, there is shown another embodiment of the bleed arrangement in which the top of the hat-shaped attenuator 16 is provided with a cover member 29 that has relatively few holes, for example eight outer holes 31, a single central hole 32, and eight intermediate holes 33, between the central one and the eight outer ones. The central hole 32 and the intermediate holes 33 are about the same size, and smaller than, the outer holes 31. In themselves, the holes 31, 32 and 33 provide substantially unrestricted flow of the air from the valve 4 but, just beneath the top of the member 16, there is a layer 35 of metallic foam providing tortuous paths through the attenuator and tending to even out the distribution of the flow of air from the bleed valve. The foam 35 could comprise Retimet (trade mark) metal foam. In the case of the second embodiment, the valve 4 need not be a bullet-type valve; instead it could be a sleeve valve or the like. In addition, the invention includes an attenuator 16 in which the central hole 32 is absent.

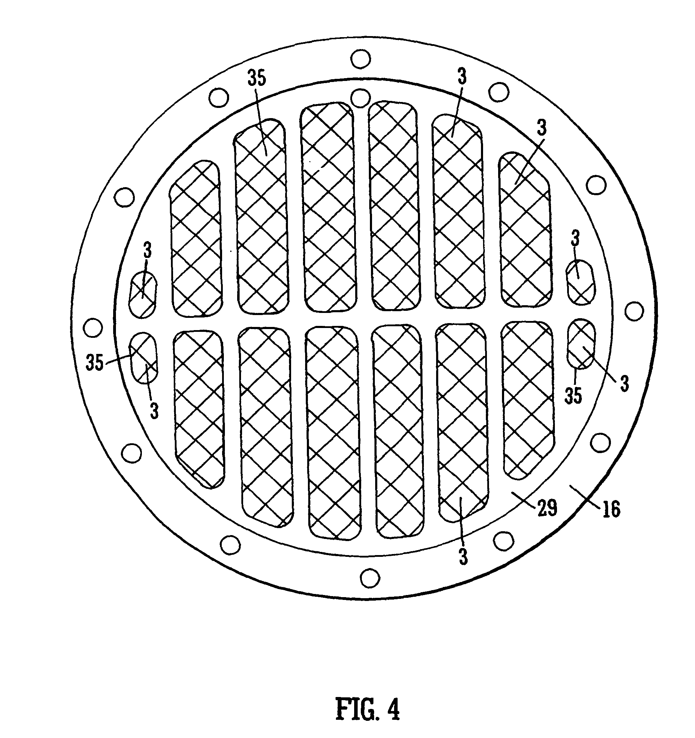

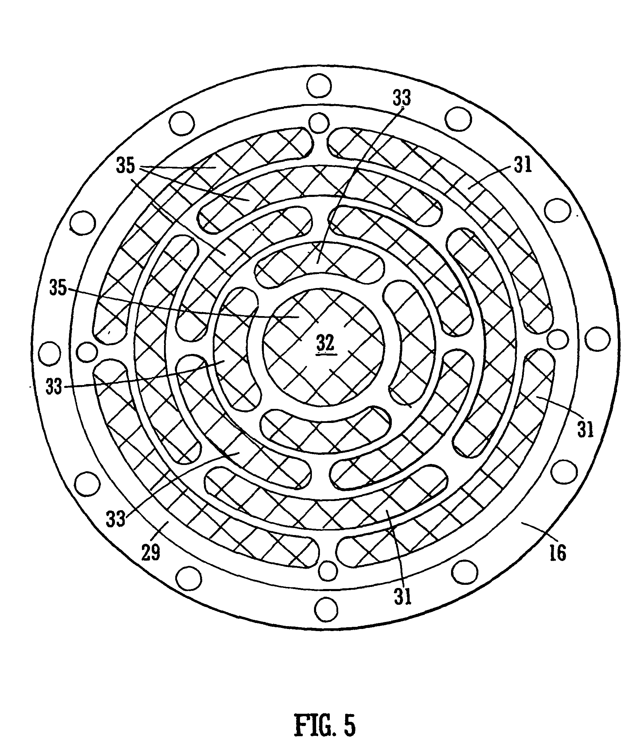

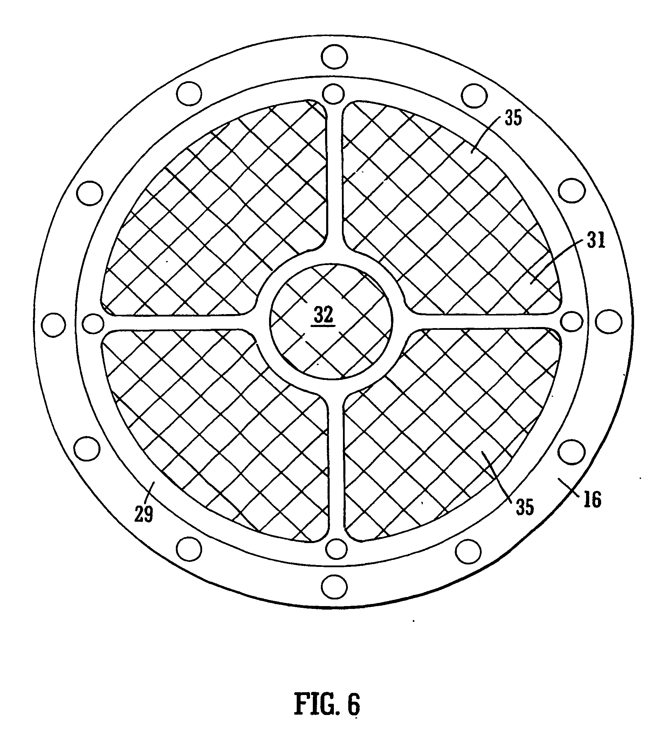

Referring to Figures 4 to 6, there is shown a number of alternative layouts of holes in the cover 29 of the attenuator 16. The size, shape and positioning of the holes 31, 32, 33 may be changed to suit different flow-rates of air. A Retimet foam layer 35 may be provided beneath the member 16.

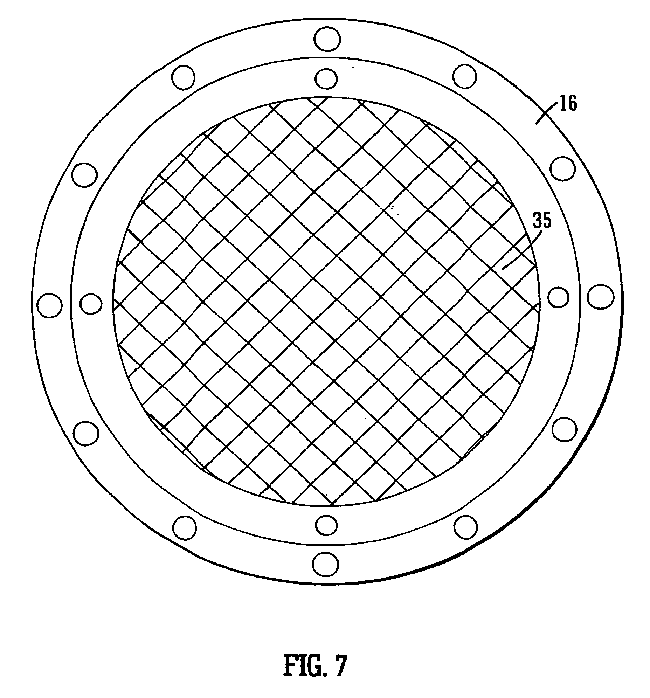

In the embodiment shown in Figure 7, the cover 29 of the attenuator 16 is omitted and effectively replaced entirely by a self supporting layer of Retimet foam layer 35.

The metal foam 35 could incorporate different grades of foam; for example, the centre area 32 could be of a grade more restrictive to flow than the outer area.

Foams are graded with a number system representing the number of pores/cells per linear inch; e.g. 80 grade has 80 cells per inch. It is expected that the range of foams suitable for this application would be in the range 5 to 150 grade, and preferably be in the range 10 to 80 grade.

Changes of the grade of the layer of metal foam 35 of Figures 3 to 7 could produce different noise reduction characteristics. For example different grades of foam with different porosity would reduce different noise frequencies.

A sandwich structure of layers of foam of different grades would alternate a wider range of noise frequencies and provide improved noise reduction. Also, by using foams of different thickness one could also change the noise reduction properties by changing the flow rate. This needs to be balanced against the desired flow rate from the valve 6 and the pressure drop across the valve 6.

The layer of metallic foam 35 of Figures 3 to 6 may have different zones of different porosity aligned with selected holes 31, 32, 33 in the cover 29. Similarly, the inserts of metallic foam 35 of Figure 7 can have a different porosity for different zones. In this way, one can accommodate different airflow rates or different levels of sound attenuation for different applications and thus provide greater flexibility in the design of the characteristics of the attenuator.

It is to be understood that the layer 35 of metallic foam shown in Figures 3 to 6 may be replaced by individual inserts of metallic foam that are secured in each of the holes 31, 32, 33.

It may be possible to use a mat of metal or other fibres to produce a similar effect to the metal foam to control flow rate and pressure drop across the valve 6 to reduce noise. Such a mat could be a woven or non-woven fibre structure or fabric.

The cover 29 might be required or desirable in some of those applications where a foam metal layer is used, for example, to restrict air flow more in some areas than in other areas. But in other applications the cover 29 may not be needed. Where a cover 29 is used it may be of any support structure such as perforated metal or plastics material or could simply comprise two mutually orthogonal sets of parallel wires or wire mesh to retain the foam metal layer 35 in place.

## Claims

1. An air bleed system for a turbofan aircraft engine, the system comprising duct means (1, 5) for receiving air from a compressor stage of the engine and directing said air to a bypass duct (20) of the engine valve means (4, 6) within the duct means for controlling the flow of said air, and a sound attenuator member (16) extending over the duct means downstream and having apertures (17, 31, 32, 33) distributed over the member for passing paid air, **characterised in that** the apertures of the attenuator member (16) are arranged for the distribution of the air passing through the attenuator member to be relatively more restricted in a central region (19) of the member than in another region (18) outside said central region.

2. A system according to daim 1, wherein said another region is an annular region extending round said central region.

3. A system according to claim 1 or claim 2, wherein the valve (4) and attenuator member are constructed for the pressure drop from the upstream to the downstream side of the valve member (6) to be substantially equal to the pressure drop through the attenuator member.

4. A system according to claim 1, 2 or 3, wherein the attenuator member is positioned for a high pressure stream of air from the valve to impinge upon said central region.

5. A system according to claim 1, 2, 3 or 4, wherein the attenuator member comprises a substantial number of relatively small perforations (17) distributed over a peripheral region of the attenuator member and no or relatively few such apertures in the central region (19).

6. Apparatus according to claim 1 or claim 2, wherein the member (16) comprises a layer of metallic foam (35) through which the pressurised fluid may pass.

7. Apparatus according to claim 2, wherein metallic foam inserts (35) are provided in at least some of the holes (17, 31, 32, 33) in the attenuator member (16).

8. Apparatus according to claim 2 or claim 4, wherein the metallic foam (35) has different zones of different porosity.

9. Apparatus according to claim 3, wherein selected insets (35) have a different porosity compared with other inserts.

10. Apparatus according to any preceding claim, wherein the valve is a bullet valve.

## Patentansprüche

1. Luftabzapfsystem für ein Turbofan-Flugzeugtriebwerk, wobei das System umfasst: ein Führungsmittel (1, 5) zur Aufnahme von Luft von einer Kompressorstufe des Triebwerks und zum Leiten der Luft zu einem Bypass-Kanal (20) des Triebwerks, ein Ventilmittel (4, 5) innerhalb des Führungsmittels zum Kontrollieren der Strömung der Luft und ein Schalldämpfungselement (16), welches sich stromabwärts über das Führungsmittel erstreckt und über das Element verteilte Öffnungen (17, 31, 32, 33) zum Durchlassen der Luft aufweist, **dadurch gekennzeichnet, dass** die Öffnungen des Dämpfungselements (16) zur Verteilung der durch das Dämpfungselement hindurchtretenden Luft angeordnet sind, so dass sie in einem zentralen Bereich (19) des Elements relativ mehr eingeschränkt sind als in einem anderen Bereich (18) außerhalb des zentralen Bereichs.

2. System nach Anspruch 1, worin der andere Bereich ein sich um den zentralen Bereich erstreckender ringförmiger Bereich ist.

3. System nach Anspruch 1 oder Anspruch 2, worin das Ventil (4) und das Dämpfungselement konstruiert sind, so dass der Druckabfall von der stromaufwärts gelegenen Seite zu der stromabwärts gelegenen Seite des Ventilmittels (6) im Wesentlichen gleich dem Druckabfall durch das Dämpfungselement ist.

4. System nach Anspruch 1, 2 oder 3, worin das Dämpfungselement positioniert ist, so dass eine Hochdruckströmung der Luft von dem Ventil auf den zentralen Bereich auftrifft.

5. System nach Anspruch 1, 2, 3 oder 4, worin das Dämpfungselement eine substanzielle Anzahl von relativ kleinen Perforationen (17) aufweist, die über einen peripheren Bereich des Dämpfungselements verteilt sind, wobei keine oder relativ wenige solcher Öffnungen in dem zentralen Bereich (19) verteilt sind.

6. Vorrichtung nach Anspruch 1 oder Anspruch 2, worin das Element (16) eine Lage Metallschaum (35) umfasst, durch welchen das unter Druck stehende Fluid hindurchtreten kann.

7. Vorrichtung nach Anspruch 2, worin Metallschaumeinsätze (35) in zumindest einigen der Öffnungen (17, 31, 32, 33) in dem Dämpfungselement (16) vorgesehen sind.

8. Vorrichtung nach Anspruch 2 oder Anspruch 4, worin der Metallschaum (35) unterschiedliche Zonen unterschiedlicher Porosität aufweist.

9. Vorrichtung nach Anspruch 3, worin ausgewählte Einsätze (35) eine im Vergleich mit anderen Einsätzen unterschiedliche Porosität aufweisen.

10. Vorrichtung nach einem der vorhergehenden Ansprüche, worin das Ventil ein Projektil-Ventil ist.

## Revendications

1. Système de prélèvement d'air pour un turboréacteur d'aéronef à double flux, le système comprenant un moyen formant conduit (1, 5) destiné à recevoir de l'air provenant d'un étage de compresseur du moteur et diriger ledit air vers un conduit de dérivation (20) du moyen formant soupape de moteur (4, 6) à l'intérieur du moyen formant conduit destiné à commander l'écoulement dudit air, et un élément d'atténuation de bruit (16) qui s'étend sur le moyen formant conduit en aval et ayant des ouvertures (17, 31, 32, 33) réparties sur l'élément destinées à faire passer ledit air, **caractérisé en ce que** les ouvertures de l'élément d'atténuation (16) sont agencées pour que la répartition de l'air passant à travers l'élément d'atténuation soit relativement plus limitée dans une région centrale (19) de l'élément que dans une autre région (18) à l'extérieur de ladite région centrale.

2. Système selon la revendication 1, dans lequel ladite autre région est une région annulaire qui s'étend autour de ladite région centrale.

3. Système selon la revendication 1 ou 2, dans lequel la soupape (4) et l'élément d'atténuation (16) sont construits pour que la chute de pression du côté en amont au côté en aval de l'élément formant soupape (6) soit sensiblement égale à la chute de pression à travers l'élément d'accumulation.

4. Système selon la revendication 1, 2 ou 3, dans lequel l'élément d'atténuation est positionné pour qu'un flux d'air haute pression de la soupape affecte ladite région centrale.

5. Système selon la revendication 1, 2, 3 ou 4, dans lequel l'élément d'atténuation comprend un nombre considérable de perforations (17) relativement petites réparties sur une région périphérique de l'élément d'atténuation et aucune ou relativement peu de ces ouvertures dans la région centrale (19).

6. Appareil selon la revendication 1 ou 2, dans lequel l'élément (16) comprend une couche de mousse métallique (35) à travers laquelle le fluide pressurisé peut passer.

7. Appareil selon la revendication 2, dans lequel des pièces rapportées en mousse métallique (35) sont disposées dans au moins quelques uns des trous (17, 31, 32, 33) dans l'élément d'atténuation (16).

8. Appareil selon la revendication 2 ou 4, dans lequel la mousse métallique (35) a différentes zones de porosité différente.

9. Appareil selon la revendication 3, dans lequel les pièces rapportées (35) sélectionnées ont une porosité différente en comparaison avec d'autres pièces rapportées.

10. Appareil selon l'une quelconque des revendications précédentes, dans lequel la soupa pe est une soupape à corps central.
